Europäisches Patentamt

European Patent Office

Office européen des brevets

(11) Numéro de publication: **0 057 640**
**B1**

(12) **FASCICULE DE BREVET EUROPEEN**

(45) Date de publication du fascicule du brevet: **19.09.84**

(21) Numéro de dépôt: **82400147.3**

(22) Date de dépôt: **27.01.82**

(51) Int. Cl.³: **B 60 T 11/20,** B 62 D 11/08

(54) **Système de freinage pour véhicule automobile formé d'un tracteur et d'une remorque.**

(30) Priorité: **30.01.81 FR 8101834**

(43) Date de publication de la demande:
**11.08.82 Bulletin 82/32**

(45) Mention de la délivrance du brevet:
**19.09.84 Bulletin 84/38**

(84) Etats contractants désignés:
**DE GB IT NL**

(56) Documents cités:
**DE-A-2 213 944**
**FR-A-2 134 082**
**FR-A-2 249 789**
**FR-A-2 300 001**

(73) Titulaire: **SOCIETE ANONYME D.B.A.**
**Centre Paris Pleyel**
**F-93521 St-Denis Cédex 01 (FR)**

(72) Inventeur: **Muterel, Roland**
**5 résidence Les Beaux Lieux**
**F-95550 Bessancourt (FR)**

(74) Mandataire: **Poidatz, Emmanuel et al**
**Service Brevets Bendix 44 rue François 1er**
**F-75008 Paris (FR)**

Courier Press, Leamington Spa, England.

## Description

L'invention se rapporte aux systèmes de freinage pour véhicules automobiles formés d'un tracteur et d'une remorque.

Sur certains véhicules, notamment à usage agricole, il est courant de prévoir trois circuits de freinage, le premier desservant un ou plusieurs moteurs de frein associés à une ou plusieurs roues situées d'un côté du tracteur, le second desservant un ou plusieurs moteurs de frein associés à une ou plusieurs roues situées de l'autre côté du tracteur et le troisième desservant les moteurs de freins associés aux roues de la remorque.

La mise sous pression de ces circuits est assurée au moyen de deux générateurs, communément appelés maître-cylindres, dont les pédales de commande peuvent être actionnées soit séparément soit simultanément.

La finalité de tels systèmes est de pouvoir assurer le freinage des roues d'une seul côté du tracteur afin d'assister les changements de direction de ce dernier, par actionnement d'une seul des deux maître-cylindres ou de pouvoir assurer le freinage des deux côtés du tracteur afin de ralentir celui-ci de manière classique, par actionnement simultané des deux maître-cylindres, dont les deux pédales sont alors accouplées.

Dans ce dernier cas, pour assurer un freinage égal des deux côtés du véhicule, il convient de rendre égales les pressions de freinage provenant des deux maître-cylindres. Ceci est assuré habituellement au moyen d'ensembles équilibreurs de pression.

En outre, en ce qui concerne la remorque, on cherche à n'assurer le freinage de cette dernière que lors d'un freinage de ralentissement du tracteur.

On connaît du brevet français publié sous le numéro 2 249 789 un système de freinage, pour un tel véhicule, du type comprenant deux maître-cylindres, reliés l'un à un frein de roue gauche et l'autre à un frein de roue droite du tracteur, qui peuvent être actionnés soit individuellement en vue de la direction du véhicule, soit ensemble en vue du freinage du véhicule. Pour assurer l'égalisation des pressions entre les deux maître-cylindres et commander le freinage de la remorque, ce système comprend en outre un cylindre émetteur de pression contenant un piston pilote pour les freins de roue de la remorque, lequel piston est rappelé par un ressort, et un piston égalisateur pour les maître-cylindres, ces deux pistons limitant, entre eux une chambre de pression commune qui est reliée à l'un des maître-cylindres, tandis que le piston égalisateur limite par ailleurs une autre chambre de pression reliée à l'autre maître-cylindre.

Un tel système de freinage présente les inconvénients suivants:

En premier lieu, chaque fois que l'on procède à l'actionnement d'un seul maître-cylindre en vue de la direction du tracteur, il si produit un freinage de la remorque, ce qui s'oppose à l'effet recherché.

En second lieu, en cas de panne simultanée des deux circuits de freinage du tracteur, ce qui peut se produite lorsque, à la suite de freinages répétés, le liquide de freinage entre en ébullition, phénomène connu sous le nom de "vapor lock", il y a perte totale de freinage, y compris le freinage de la remorque.

Pour pallier ces inconvénients, la présente invention propose un système de freinage, pour véhicule automobile formé d'un tracteur et d'une remorque, comprenant deux maître-cylindres reliés l'un à un frein de roue gauche et l'autre à un frein de roue droite du tracteur, qui peuvent être actionnés soit individuellement en vue de la direction du véhicule, soit ensemble en vue du freinage du véhicule, ledit système comprenant en outre des moyens pour équilibrer les pressions de freinage des roues droite et gauche lors de l'actionnement simultané des deux maître-cylindres ainsi que des moyens émetteurs de pression reliés aux freins de roues de la remorque, caractérisé en ce que les maître-cylindres sont des maître-cylindres tandem, chaque maître-cylindre comportant, dans un même alésage, une première chambre de pression reliée respectivement au frein de roue correspondant du tracteur et une seconde chambre de pression, lesdits moyens émetteurs de pression étant constitués par les deux secondes chambres reliées à la fois entre elles et au circuit de freinage des roues de la remorque, la liaison entre les deux secondes chambres assurant l'équilibrage de pression entre les roues droite et gauche du tracteur lors du freinage du véhicule.

L'invention sera maintenant décrite en se référant aux dessins annexés, dans lesquels:

— la Fig. 1 est une représentation schématique d'un système de freinage selon l'invention, pour véhicule composé d'un tracteur et d'une remorque; et

— la Fig. 2 est une vue en coupe longitudinale d'un maître-cylindre utilisable dans un système tel que représenté à la Fig. 1.

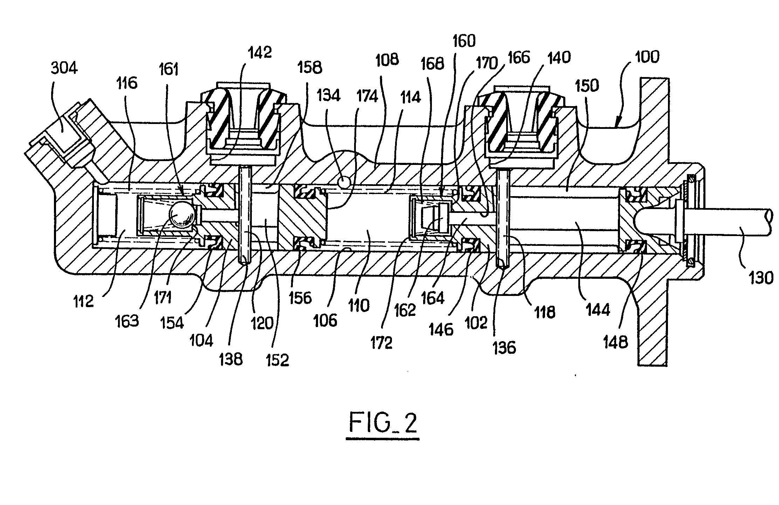

Le système de freinage 10 représenté à la Fig. 2 se compose de deux maître-cylindres 100 et 200, du type tandem, de construction identique et montés sur le tracteur.

Le maître-cylindre 100 comprend deux pistons 102 et 104 montés coulissant dans un alésage 106 d'un boîtier 108 et définissant une première chambre de pression 110 et une seconde chambre de pression 112. Deux ressort 114 et 116 rapellent les pistons 102 et 104 dans une position de repos au contact de deux butées 118 et 120 respectivement, position dans laquelle les chambres de pression sont en communication avec des réservoirs 122 et 124.

Une pédale 126, articulée en 128, est susceptible de déplacer le piston 102 grâce à une tige de poussée 130 pour la mise en oeuvre du maître-cylindre.

Le maître-cylindre 200 comprenant les mêmes éléments ne sera pas décrit en détail.

Pour une mise en oeuvre simultanée des deux maître-cylindres 100 et 200, il est prévu une troisième pédale 12 articulée en 14 et portant une barre transversale 16 capable d'entraîner simultanément les deux pédales 126 et 226 lors d'un enfoncement de la pédale 12.

Ce dispositif n'a été donné qu'à titre indicatif et pourra être remplacé par tout dispositif équivalent capable d'entraîner simultanément les deux pédales 126 et 226 par enfoncement d'une seule pédale.

Le tracteur comporte un frein de roue gauche 132 relié par un conduit 134 à la première chambre de pression 110 du maître-cylindre 100, et un frein de roue droite 232, relié par un conduit 234 à la première chambre de pression 210 du maître-cylindre 200.

La remorque comporte des freins de roue 300 reliés par des conduits 302 et 304 à la fois à la second chambre de pression 112 du maître-cylindre 100 et à la seconde chambre de pression 212 du maître-cylindre 200. En variante, non représentée, le circuit desservant la remorque peut être équipé d'un dispositif d'assistance.

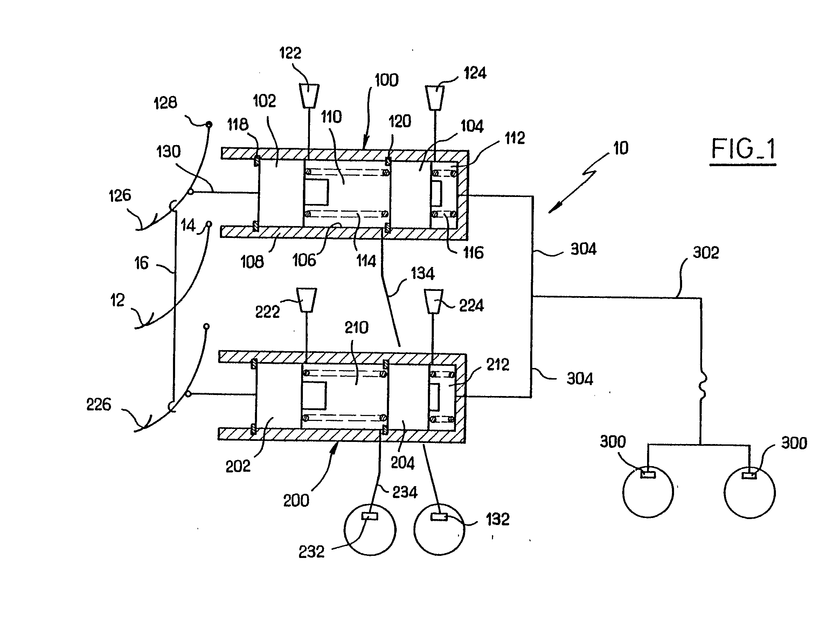

A la figure 2, on a représenté un mode de réalisation d'un maître-cylindre particulièrement adapté dans le cadre de la présente invention. Les éléments déjà décrits en se référant à la figure 1 portent les mêmes références, notamment le boîtier 108, l'alésage 106, les pistons 102 et 104, les chambres de pression 110 et 112, les ressorts de rappel 114 et 116, les butées 118 et 120 et enfin la tige de poussée 130.

Dans ce mode de réalisation, les butées 118 et 120 sont réalisées par deux goupilles cylindrique fendues dans le sens de la longueur et emmanchées à force dans des perçages 136 et 138 sensiblement perpendiculaires à l'alésage 106 et débouchant dans des orifices de raccordement 140 et 142, lesquels assurent la liaison du maître-cylindre 100 avec les réservoirs 122 et 124 représentés à la figure 1.

Le piston 102 comporte une entaille longitudinale 144 dans laquelle se projette le goupille 118 et définissant avec l'alésage 106, entre deux joints 146 et 148, un première chambre de réalimentation 150. De même, le piston 104 comporte un entaille longitudinale 152 dans laquelle se projette la goupille 120 et définissant avec l'alésage 106, entre deux joints 154 et 156, une seconde chambre de réalimentation 158. Dans les pistons 102 et 104 sont montés deux clapets 160 et 161 qui commandent la communication entre les chambres de pression 110 et 112 et les chambres de réalimentation 150 et 158 respectivement.

Le premier clapet 160 comporte un élément de fermeture 162 en matériau élastomère porté par un tige 164 montée coulissante dans un passage 166 du piston 102 tout en permettant un libre écoulement du fluide entre la tige et le passage. Un ressort 168 rappelle l'élément de fermeture 162 en direction d'une siège 170 formé sur le piston. Dans la position de repos du piston 102, la tige 164 vient en butée contre la goupille 118 et l'élément de fermeture 162 est dégagé du siège 170, la première chambre de réalimentation 150 étant ainsi en communication avec la première chambre de pression 110.

Le second clapet 161 est pratiquement identique au premier et tous les éléments communs portent le même numéro de référence, augmenté d'une unité. La seule différence réside dans l'élément de fermeture 163, lequel est réalisé en matériau rigide pour des raisons qui seront expliquées plus loin.

Enfin, le piston 102 comporte une projection axiale 172 capable d'engager l'extrémité postérieure 174 du piston 104 comme il sera expliqué ultérieurement.

Le fonctionnement du système de freinage ainsi décrit est le suivant:

Lors d'un mise en oeuvre du seul maître-cylindre "gauche" 100, par enfoncement de la pedale 126, la tige de poussée 130 déplace le piston 102 vers l'intérieur de la première chambre de pression.

En un premier temps, l'élément de fermeture 162 du clapet 160 vient au contact de son siège 170, isolant ainsi la première chambre de réalimentation 150 de la première chambre de pression 110. Le liquide comprimé dans cette dernière exerce sur le second piston 104 une force qui provoque le déplacement de ce dernier vers l'intérieur de la seconde chambre de pression 112. De la même manière, l'élément de fermeture 163 du second clapet vient au contact de son siège 171, isolant la seconde chambre de réalimentation 158 de la seconde chambre de pression 112.

En un second temps, lorsqu'on poursuit l'enfoncement de la pédale 126, on constate que le liquide contenu dans la seconde chambre de pression 112 s'écoule sans résistance dans le conduit 304, puis dans la seconde chambre de pression 212 du maître-cylindre "droit" 200 et, au travers de la valve 261 qui est en position ouverte, est refoulé dans le réservoir 224. Il y a donc déplacement simultané des deux pistons 102 et 104 sans compression du liquide dans la première chambre de pression 110, jusqu'à ce que le piston 104 vienne en butée au fond de l'alésage 106.

Enfin, en un troisième temps, le premier piston 102 se déplace seul en comprimant le fluide contenu dans la première chambre de pression 110. Ce liquide sous pression s'écoule dans le conduit 134 jusqu'au moteur de frein gauche 132 du tracteur, ce qui, en raison du freinage de la roue gauche qui en résulte, provoque le virage du tracteur vers la gauche.

On note que le mode de réalisation des clapets 161 et 261 doit répondre à un critère particulier.

En effet, comme on vient de le voir, lors d'une mise en oeuvre du seul maître-cylindre 100, le liquide de frein est chassé de la chambre 112 jusqu'au réservoir 224. Il est donc important que l'élément de fermeture 263 du clapet 261 reste éloigné de son siège 271 et que le flux de liquide ne risque pas de provoquer la fermeture de ce clapet. Pour cette raison, on a choisi de réaliser l'élément de fermeture 263 en matériau rigide afin d'éviter ce risque.

On conçoit que d'autres modes de réalisation des clapets 161 et 261 pourront être choisis sans sortir du cadre de la présente invention. Pour des raisons évidentes ces remarques s'appliquent également au clapet 161 du premier maître-cylindre 100.

Symétriquement, une mise en oeuvre du seul maître-cylindre "droit" 200 provoque le freinage du frein de roue droit 232 et le virage du tracteur vers la droite.

Dans un cas comme dans l'autre, on remarque que les freins de roue de la remorque ne sont pas alimentés. En effet, en cas de freinage "directionnel", il serait inopportun de commander le freinage de la remorque qui s'opposerait au résultat recherché.

Lors d'une mise en oeuvre simultanée des deux maître-cylindres par enfoncement de la pédale 12, les deux premiers pistons 102 et 202 se déplacent simultanément vers l'intérieur des premières chambres de pression 110 et 210 en provoquant la fermeture des valves 160 et 260; ensuite, les deux seconds pistons 104 et 204, se déplacent simultanément vers l'intérieur des secondes chambres de pression 112 et 212 en provoquant la fermeture des valves 161 et 261.

Lorsqu'on poursuit l'enfoncement de la pédale 12, les quatre chambres de pression 110, 120, 112 et 212 sont mises en pression et délivrent du fluide sous pression, les deux premières aux freins de roue gauche et droit du tracteur séparément et les deux secondes aux freins de roue de la remorque ensemble. Les freins de roue du véhicule étant tous alimentés, il s'ensuit donc un freinage de ce dernier.

Les deux secondes chambres 112 et 212 étant en communication mutuelle, il règne donc dans ces deux chambres une pression identique, et, par voie de conséquence, il règne également une pression identique dans les premières chambres 110 et 210. En effet, si pour diverses raisons la pression régnant dans la première chambre 110 tend à augmenter plus rapidement que celle régnant dans l'autre première chambre 210, il se produit un égalisation de pression entre les deux chambres 110 et 112 par déplacement du piston 104 vers cette dernière et une égalisation de pression entre les deux chambres 212 et 210 par déplacement du piston 204 vers cette dernière.

Les freins de roue droite et gauche du tracteur étant alimentés avec des pressions égales, la stabilité directionnelle du véhicule est assurée lors du freinage du véhicule par mise en oeuvre simultanée des deux maître-cylindres.

Il sera maintenant examiné le comportement du système de freinage en cas de défaillance des divers circuits:

1. Défaillance du circuit "remorque":

Une telle défaillance est sans effet sur les actions de freinage directionnelles (mise en oeuvre d'un seul maître-cylindre).

Lors d'une mise en oeuvre des deux maître-cylindres, les deux pistons 104 et 204 se déplacent ensemble jusqu'à venir en butée au fond des alésages 106 et 206 respectivement. Les pistons 102 et 202 compriment alors le liquide dans les chambres 110 et 210 respectivement. Il y a alors freinage de la roue droite et de la roue gauche du tracteur simultanément.

On constate toutefois qu'il n'y a plus égalisation des pressions de freinage droite/gauche mais que la capacité de freinage du tracteur est intéralement conservée.

Remarque: lorsque le tracteur est utilisé sans remorque, le conduit 302 de distribution aux freins de roue de la remorque est simplement bouchonné. De la sorte, il y a égalisation des pressions de freinage droite/gauche du tracteur puisque les chambres 112 et 212 sont en communication mutuelle comme il a déjà été vu.

2. Défaillance de l'un des circuits du tracteur:

Supposons qu'une telle défaillance concerne le circuit 234 alimentant le frein de roue droite du tracteur. Lors de l'enfoncement de la pédale 12, il n'apparait aucune pression dans la chambre de pression 210 lors de l'avancement du piston 202. Par contre, dans le premier maître-cylindre 100, le déplacement du piston 102 provoque la mise en pression de la chambre de pression 110 et le freinage de la roue gauche du tracteur une fois que le piston 104 a atteint le fond de l'alésage 106, le liquide de frein contenu au départ dans la chambre de pression 112 ayant été chassé vers le réservoir 224 au travers de la chambre de pression 212 et de la valve 261 puisque le piston 204 reste immobile, comme il a déjà été vu.

En outre, lorsque la pédale 12 a été suffisamment enfoncée, le déplacement conjoint des deux pistons 102 et 202 amène ce dernier au contact du piston 204. Tout déplacement supplémentaire de la pédale 12 provoque l'entraînement direct du piston 204 par le piston 202 et l'alimentation des freins de roue de la remorque depuis la chambre de pression 212.

3. Défaillance des deux circuits du tracteur:

Avant d'étudier le comportement du système dans cette éventualité, il sera d'abord examiné les raisons pour lesquelles une telle défaillance peut se produire. En effet, on constate en pratique qu'une double défaillance est en phénomène rarissime et les diverses réglementations internationales exigent que dans la définition et le dimensionnement des systèmes de freinage il ne soit envisagé qu'une seule défaillance. Il convient toutefois de réaliser que les véhicules envisagés dans la présente demande circulent fréquemment à la limite du poids total roulant autorisé, voire au-delà de cette limite. Dans ces circonstances, les freins du tracteur sont sollicités à un point tel que leur échauffement provoque l'ébullition du liquide de freinage, phénomène connu sous le nom de "vapor lock". Une analyse fine permet de constater que ce phénomène se produit d'abord dans l'un des circuits de freinage qui perd alors sa capacité de freinage. L'effort de freinage à la pédale sert alors intégralement à comprimer le liquide de frein dans le circuit intact. Le frein intact, déjà porté à haute température, assure alors momentanément un freinage pratiquement double de celui qu'il assurait précédemment. Sa température monte alors très rapidement et le phénomène de "vapor lock" se produit également dans ce circuit quelques instants plus tard. Le système de freinage se comporte alors de la manière suivante: les deux pistons 102 et 202 se déplacent simultanément sans résistance jusqu'à entrer en contact avec les deux pistons 104 et 204. L'effort à la pédale 12 sert alors à comprimer le liquide de frein dans les secondes chambres 112 et 212, le freinage de la remorque étant donc assuré même en cas de défaillance des deux circuits de freinage du tracteur.

Enfin, bien que les réservoirs 124 et 224 aient été représentés séparés, on préféra les réaliser sous forme d'un réservoir unique.

En effet, en cas de freinages directionnels répétés dans la même direction, par exemple vers la droite par mise en oeuvre du maître-cylindre 200, le liquide chassé de la chambre de pression 212 vers le réservoir 124 ne peut revenir vers cette chambre de pression qu'après un certain délai, dû aux multiples obstacles rencontrés par le liquide; il y a donc un risque d'appauvrir et même de vider le réservoir 224. Cet inconvénient est évité si les deux réservoirs ne constituent qu'un réservoir unique.

## Revendications

1. Système de freinage, pour véhicule automobile formé d'un tracteur et d'une remorque, comprenant deux maître-cylindres (100, 200) reliés l'un à un frein de roue gauche (132) et l'autre à un frein de roue droite (232) du tracteur, qui peuvent être actionnés soit individuellement en vue de la direction du véhicule, soit ensemble en vue de freinage du véhicule, ledit système comprenant en outre des moyens pour équilibrer les pressions de freinage des roues droite et gauche lors de l'actionnement simultané des deux maître-cylindres ainsi que des moyens émetteurs de pression reliés aux freins de roues de la remorque, caractérisé en ce que les maître-cylindres (100, 200) sont des maître-cylindres tandem, chaque maître-cylindre comportant, dans un même alésage (106; 206), une première chambre de pression (110; 210 reliée respectivement au frein de roue correspondant (gauche 132; droit 232) du tracteur et une seconde chambre de pression (112; 212), lesdits moyens émetteurs de pression étant constitués par les deux secondes chambres (112; 212) reliées à la fois entre elles et au circuit de freinage (302) des roues de la remorque, la liaison entre les deux secondes chambres assurant l'équilibrage de pression entre les roues droite et gauche du tracteur lors du freinage du véhicule.

2. Système de freinage selon la revendication 1, caractérisé en ce que chacun desdits maître-cylindres (100) comprend un boîtier (108) percé d'un alésage (106), deux pistons (102, 104) montés coulissants dans ledit alésage, et délimitant dans ce dernier lesdites première (110) et seconde (112) chambres de pression, deux réservoirs (122, 124) étant en communication avec ledit alésage et lesdits pistons (102, 104) commandant chacun l'écoulement de fluide entre lesdits réservoirs (122, 124) et lesdites chambres de pression (110, 112) respectivement, lesdits pistons étant rappelés par des moyens élastiques (114, 116) vers une position de repos au contact avec deux butées (118, 120), position dans laquelle lesdites chambres de pression communiquant avec lesdits réservoirs.

3. Système de freinage selon la revendication 2, caractérisé en ce que chacun desdits maître-cylindres comprend deux clapets (160, 161) commandé par lesdits pistons (102, 104) et contrôlant l'écoulement de fluide entre lesdits réservoirs (122, 124) et lesdites chambres de pression (110, 112).

4. Système de freinage selon la revendication 3, caractérisé en ce que dans chacun desdits maître-cylindres, celui desdits clapets (161, 261) qui contrôle l'écoulement de fluide entre le réservoir correspondant (124, 224) et la seconde chambre de pression (112, 212) comporte un élément de fermeture (163, 262) en matériau rigide.

5. Système de freinage selon l'une quelconque des revendications 2 à 4, caractérisé en ce que les deux réservoirs (124, 224) reliés auxdites secondes chambres de pression (112, 212) constituent un réservoir unique.

## Patentansprüche

1. Bremsystem für Kraftfahrzeuge, zusammengesetzt aus Schlepper und Anhänger, mit zwei Hauptbremszylindern (100, 200), von denen der eine an eine Bremse (132) für ein linkes Fahrzeugrad und der andere an eine Bremse (232) für ein rechtes Fahrzeugrad angeschlossen ist und die wahlweise unabhängig voneinander betätigbar sind, um das Fahrzeug zu steuern, oder zusammen betätigbar sind, um das Fahrzeug abzubremsen, mit Mitteln zum Ausgleichen der Bremsdrucke für das rechte und linke Fahrzeugrad bei gleichzeitiger Betätigung beider Hauptbremszylinder und mit Druckabgabemitteln, welche mit den Radbremsen des Anhängers verbunden sind, dadurch gekennzeichnet, daß die Hauptbremszylinder (100, 200) Tandem-Hauptbremszylinder sind und jeder Hauptbremszylinder in ein und derselben Bohrung (106; 206) eine erste Druckkammer (110; 210), die jeweils mit der zugeordneten Radbremse (links 132; rechts 232) des Traktors verbunden ist, und eine zweite Druckkammer (112; 212) aufweist und daß die Druckabgabemittel durch die zweiten Druckkammern (112; 212) gebildet sind, welche sowohl miteinander als auch mit dem Bremskreis (302) der Räder des Anhängers verbunden sind, wobei die Verbindung zwischen den zweiten Druckkammern den Druckausgleich zwischen dem rechten und linken Rad des Traktors beim Bremsen des Fahrzeuges sicherstellt.

2. Bremssystem nach Anspruch 1, dadurch gekennzeichnet, daß ein jeder der Hauptbremszylinder (100) ein mit einer Bohrung (106) versehenes Gehäuse (108), zwei verschiebbar in der Bohrung angeordnete Kolben (102, 104), welche in der Bohrung die erste Druckkammer (110) und die zweite Druckkammer (112) begrenzen, sowie zwei Nachfüllbehälter (122, 124) aufweist, welche mit der Bohrung in Verbindung stehen, daß die Kolben (102, 104) jeweils das Strömen von Arbeitsflüssigkeit zwischen den Nachfüllbehältern (122, 124) und den Druckkammern (110, 112) steuern und daß die Kolben durch elastische Mittel (114, 116) in Richtung auf eine Ruhestellung vorgespannt sind, in welcher sie an zwei Anschlägen (118, 120) anliegen, wobei in dieser Ruhestellung die Druckkammern mit den Nachfüllbehältern in Verbindung stehen.

3. Bremssystem nach Anspruch 2, dadurch gekennzeichnet, daß ein jeder der Hauptbremszylinder zwei Ventile (160, 161) aufweist, welche durch die Kolben (102, 104) gesteuert werden und das Fließen von Arbeitsflüssigkeit zwischen den Nachfüllbehältern (122, 124) und den Druckkammern (110, 112) steuern.

4. Bremssystem nach Anspruch 3, dadurch gekennzeichnet, daß bei jedem der Hauptbremszylinder dasjenige der Ventile (161, 261), welches das Strömen von Arbeitsflüssigkeit zwischen dem entsprechenden Nachfüllbehälter (124, 224) und der zweiten Druckkammer (112, 212) steuert, ein Verschlußteil (163, 263) aus starrem Material aufweist.

5. Bremssystem nach einem der Ansprüche 3—4, dadurch gekennzeichnet, daß die beiden Nachfüllbehälter (124, 224), die mit den zweiten Druckkammern (112, 212) verbunden sind, einen einzigen Vorratsbehälter darstellen.

**Claims**

1. A brake system for motor vehicle composed of tractor and trailer, comprising two master cylinders (100, 200) one of which is connected to a left wheel brake (132) and the other of which is connected to a right wheel brake (232) of the tractor, the master cylinders being adapted to be operated individually for steering the vehicle and being adapted to be operated in unison for braking the vehicle, said system further comprising means for balancing the braking pressures of the right and left wheel when the two master cylinders are simultaneously operated, as well as brake pressure supplying means connected to the wheel brakes of the trailer, characterized in that the master cylinders (100, 200) are tandem master cylinders, in that each master cylinder includes in one and the same bore (106; 206) thereof a first pressure chamber (110; 210) being connected to the associated wheel brake, respectively (left 132; right 232) of the tractor as well as a second pressure chamber (112; 212) and in that the pressure supplying means are formed by the second pressure chamber (112; 212) being interconnected to one another as well as connected to the braking circuit (302) of the wheels of the trailer, the connection between the second pressure chambers effectively balancing the pressures between the right wheel and the left wheel of the tractor in a vehicle braking operation.

2. The brake system as in claim 1, characterized in that each of the master cylinders (100) comprises a housing (108) having a bore (106) formed therein, two pistons (102, 104) arranged in said bore for sliding movement and defining in the latter the first pressure chamber (110) and the second pressure chamber (112), two reservoirs (122, 124) being provided, communicating with said bore, said pistons (102, 104) controlling flow of fluid between said reservoirs (122, 124) and said pressure chambers (110, 112) respectively, said pistons being biased by elastic means (114, 116) towards a non-operating position, wherein they contact two abutment means (118, 120), the pressure chambers communicating with said reservoirs in the non-operating position of the pistons.

3. The brake system as in claim 2, characterized in that each of the master cylinders comprises two valves (160, 161) operated by said pistons (102, 104) and in turn controlling flow of fluid between said reservoirs (122, 124) and said pressure chambers (110, 112).

4. The brake system as in claim 3, characterized in that in each of the master cylinders that one of the valves (161, 261) which controls flow of fluid between the corresponding reservoir (124, 224) and the second pressure chamber (112, 212) comprises a valve closure element (163, 263) made from rigid material.

5. The brake system as in one of claims 1—4, characterized in that the two reservoirs (124, 224) being connected to said second pressure chambers (112, 212) form a unique reservoir.

FIG_1

0 057 640

0 057 640

304 116 161 142 158 108 160 168 170 166 140 100
134 174 114 150

112 171 163 154 104 120 156 106 110 162 164 146 102 118 144
138 152 172 136 148 130

FIG_2